# EUROPEAN PATENT SPECIFICATION

(11) **EP 3 564 557 B1**
(45) Date of publication and mention of the grant of the patent: **20.10.2021**
(21) Application number: 17888023.3
(22) Date of filing: 12.12.2017
(51) Int. Cl.: F16H 25/20, F16D 1/02, F16H 1/28, F16H 25/24, H02K 7/06, H02K 7/116, F16H 25/22

(54) **ELECTRIC ACTUATOR**
ELEKTRISCHER AKTUATOR
ACTIONNEUR À ENTRAÎNEMENT ÉLECTRIQUE

(30) Priority: 27.12.2016 JP 2016253123
(43) Date of publication of application: 06.11.2019
(73) Proprietor: NTN Corporation, Osaka-shi, Osaka 550-0003 (JP)
(72) Inventor: SHIMIZU Tatsunori, Iwata-shi Shizuoka 438-8510 (JP)
(74) Representative: Grünecker Patent- und Rechtsanwälte PartG mbB
(86) International application number: PCT/JP2017/044575
(87) International publication number: WO 2018/123564

(56) References cited:
- WO-A1-2016/140162
- JP-A- 2009 156 415
- JP-A- 2015 061 334

## Description

### Technical Field

The present invention relates to an electric actuator.

### Background Art

In recent years, motorization of a vehicle such as an automobile progresses for power saving and reduction in fuel consumption of the vehicle. For example, a system configured to operate an automatic transmission and a brake and perform steering with use of a force of an electric motor has been developed and introduced into the market. As a so-called linear motion electric actuator to be used for the purposes described above, there is known a linear motion electric actuator using a ball screw for a motion conversion mechanism configured to covert a rotary motion of the motor into a linear motion.

As the linear motion electric actuator using the ball screw in a motion conversion mechanism unit, there exists a linear motion electric actuator in which the electric motor and the ball screw are arranged in series (arranged so as to be continuous in an axial direction) (for example, Patent Literature 1). With the configuration described above, the electric actuator, which has a simple structure and is compact, can be achieved. Further, the electric actuator of Patent Literature 1 further includes a speed reducer disposed between the electric motor and the ball screw. When the speed reducer is provided, an electric motor having a smaller size than an electric motor without the speed reducer can be adopted. Thus, a more compact electric actuator can be achieved.

### Citation List

### Patent Literature

Patent Literature 1: JP 2009-156415 A Document JP 2015 061334 A shows an actuator with the features of the preamble of claim 1.

### Summary of Invention

### Technical Problem

For example, an output required for the electric actuator differs depending on, for example, a target to be operated (purpose of use). Conversely, in order to ensure, for example, the output required for operation of the target to be operated, specifications of the electric motor and the ball screw, in addition, for example, necessity and specifications of the speed reducer are appropriately set. Therefore, even for the electric actuator having the same basic structure in which the electric motor and the ball screw are arranged in series, a wide variety of models having different specifications are required to be prepared and stored. In this case, if parts of the electric actuators are specifically designed (dedicated components are used for the electric motor and the ball screw) in accordance with, for example, the output required for the electric actuator, for example, manufacturing cost and parts control cost increase.

In view of the above-mentioned circumstances, the present invention has an object to provide an electric actuator, for which specifications of a driving unit or a motion conversion mechanism unit are easily changeable, which can in turn achieve different models of (development of a wide variety of models of) the above-mentioned type of electric actuator at low cost.

### Solution to Problem

According to the invention which has been made to achieve the object described above, there is provided an electric actuator according to claim 1. The term "clearance fit" conforms to the definition of "clearance fit" specified in JIS B0401-1.

With the configuration described above, the rotational torque can be appropriately transmitted between the driving unit comprising the electric motor and the motion conversion mechanism unit. Meanwhile, when specifications of the driving unit or the motion conversion mechanism unit are required to be changed, the outer member and the inner member can easily be separated from each other in an axial direction. Thus, the driving unit or the motion conversion mechanism unit can easily be modified into the one having different specifications. In this case, a dedicated unit in accordance with an output of the electric actuator is not required to be prepared and stored for each of the driving unit and the motion conversion mechanism unit, and hence the same driving unit or the same motion conversion mechanism unit can be used. Based on the description given above, according to one embodiment of the present invention, the specifications of the driving unit or the motion conversion mechanism unit can easily be changed. Thus, different models of the electric actuator can be achieved at low cost.

As the above-mentioned inner member, for example, a coupling provided so as to be rotatable integrally with an output shaft of the electric motor may be used. In this case, as the above-mentioned outer member, a nut of the motion conversion mechanism unit may be used.

Further, when the driving unit further comprises a speed reducer configured to decelerate rotation of the electric motor, the inner member and the outer member, which are described above, may be formed of the nut of the motion conversion mechanism unit and an output member of the speed reducer, respectively.

As the speed reducer, for example, a planetary gear speed reducer can be adopted. The planetary gear speed reducer is lightweight and compact. Besides, a reduction ratio of the planetary gear speed reducer can easily be changed. Thus, the planetary gear speed reducer is suitable as a speed reducer for the electric actuator, which is required to be lightweight and compact as much as possible for improvement of mountability onto a device to be used.

### Advantageous Effects of Invention

Based on the description given above, according to the invention, an electric actuator, for which specifications of a driving unit or a motion conversion mechanism unit are easily changeable, can be provided. Thus, different models of the electric actuator can be achieved at low cost.

### Brief Description of Drawings

FIG. 1 is a longitudinal sectional view of an electric actuator according the invention.
FIG. 2 is a perspective view of an external appearance of the electric actuator illustrated in FIG. 1.
FIG. 3 is a partially exploded perspective view of the electric actuator illustrated in FIG. 1.
FIG. 4 is a sectional view taken along the line A-A of FIG. 1 when viewed in the direction indicated by the arrows.
FIG. 5 is a partially exploded perspective view of the electric actuator illustrated in FIG. 1.
FIG. 6 is a sectional view taken along the line B-B of FIG. 1 when viewed in the direction indicated by the arrows.
FIG. 7 is a schematic sectional view taken along the line C-C of FIG. 1.
FIG. 8 is an exploded perspective view of a threaded shaft under a state in which a permanent magnet is mounted.
FIG. 9 is a longitudinal sectional view of an electric actuator according to an unclaimed second
   embodiment of the present invention.
FIG. 10 is a partially exploded perspective view of the electric actuator illustrated in FIG. 9.
FIG. 11 is a schematic sectional view taken along the line D-D of FIG.9.
FIG. 12 is a longitudinal sectional view of an electric actuator according to an unclaimed third embodiment of the present invention.
FIG. 13 is a partially exploded perspective view of the electric actuator illustrated in FIG. 12.
FIG. 14 is a partially exploded perspective view of the electric actuator illustrated in FIG. 12.

### Description of Embodiments

Now, description is made of embodiments of the present invention with reference to the drawings.

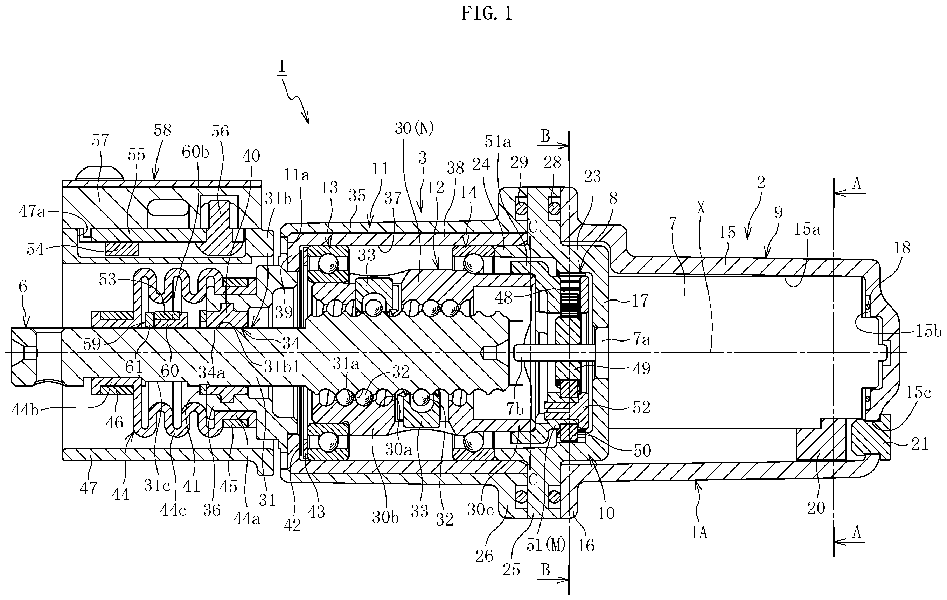

FIG. 1 is a longitudinal sectional view of an electric actuator according to the invention. The electric actuator 1 illustrated in FIG. 1 comprises a driving unit 2, a motion conversion mechanism unit 3, and an operating unit 6. The motion conversion mechanism unit 3 is configured to convert a rotary motion of the driving unit 2 into a linear motion. The operating unit 6 is configured to output the linear motion of the motion conversion mechanism unit 3 to operate a target to be operated (not shown). The driving unit 2 in this embodiment comprises an electric motor 7 and a speed reducer 8 configured to decelerate rotation of the electric motor 7 and output the decelerated rotation. The term "axial direction" described below refers to a direction along a rotation center X of the electric motor 7 illustrated in FIG. 1. In the following description, for convenience of description of orientation in the axial direction, a side on which the driving unit 2 is arranged (right side on the drawing sheet of FIG. 1) is referred to as "one axial side" and a side on which the operating unit 6 is arranged (left side on the drawing sheet of FIG. 1) is referred to as "another axial side".

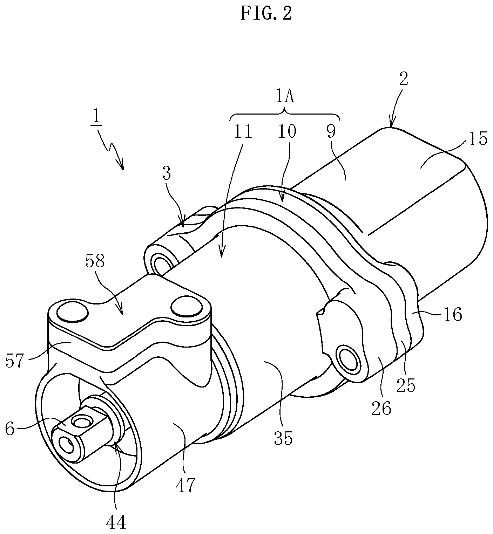

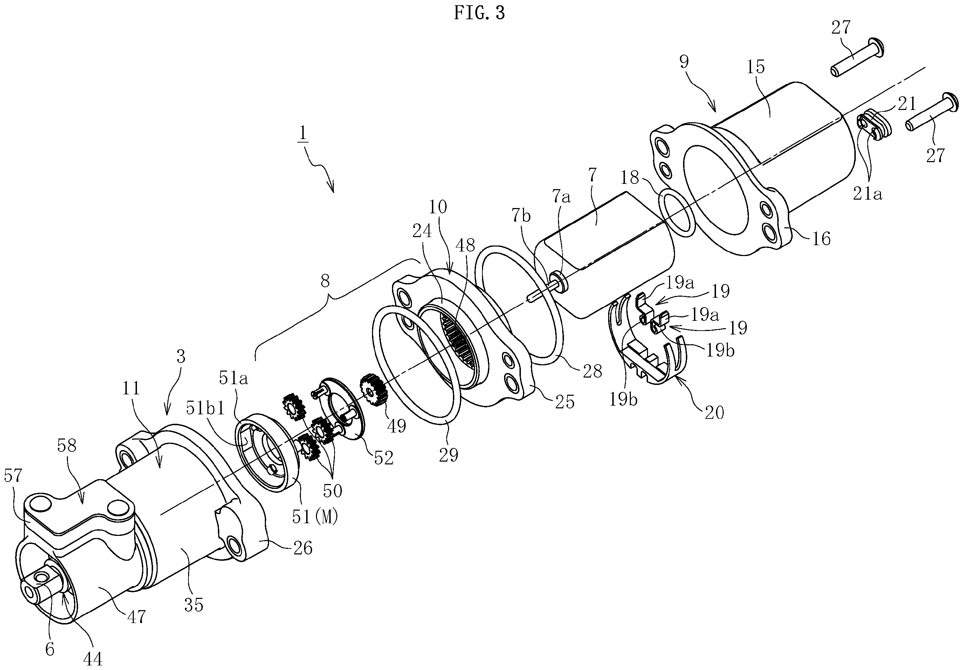

As illustrated in FIG. 1 and FIG. 2, each of the driving unit 2 and the motion conversion mechanism unit 3 comprises a member for forming a casing 1A of the electric actuator 1. More specifically, the driving unit 2 comprises a first case 9 that accommodates the electric motor 7 and a second case 10 that accommodates the speed reducer 8, and the motion conversion mechanism unit 3 comprises a third case 11 that accommodates a ball screw 12 corresponding to a motion conversion mechanism. The casing 1A is completed by coupling and integrating the above-mentioned cases 9 to 11, which are arranged continuously in the axial direction, with use of bolt members 27 illustrated in, for example, FIG. 3.

In order to enhance sealing between the adjacent cases, an O-ring 28 is provided between a flange portion 16 of the first case 9 and a flange portion 25 of the second case 10, and an O-ring 29 is provided between the flange portion 25 of the second case 10 and a flange portion 26 of the third case 11.

The driving unit 2 comprises the electric motor 7 configured to generate a driving force (rotational driving force), the first case 9 that accommodates the electric motor 7, the speed reducer 8, and the second case 10 that accommodates the speed reducer 8. The first case 9 integrally comprises a case main body 15 having a cylindrical shape with a closed end and the flange portion 16 having insertion holes for the bolt members 27 illustrated in FIG. 3.

An inner peripheral surface 15a of the case main body 15 is gradually reduced in diameter from the another axial side (opening side of the case main body 15) toward the one axial side (bottom side of the case main body 15). An outer periphery of an end of the electric motor 7 on the one axial side is held in contact with an end of the inner peripheral surface 15a of the case main body 15 on the one axial side in a state of avoiding full contact. Further, the electric motor 7 comprises a projecting portion 7a fitted into an inner periphery of a motor fitting portion 17 of the second case 10 described below. Therefore, the electric motor 7 is supported in the case main body 15 of the first case 9 and the motor fitting portion 17. An O-ring 18 configured to prevent backlash of the electric motor 7 in the axial direction and leakage of a lubricant such as grease to the outside is provided between the electric motor 7 and an inner bottom surface 15b of the case main body 15.

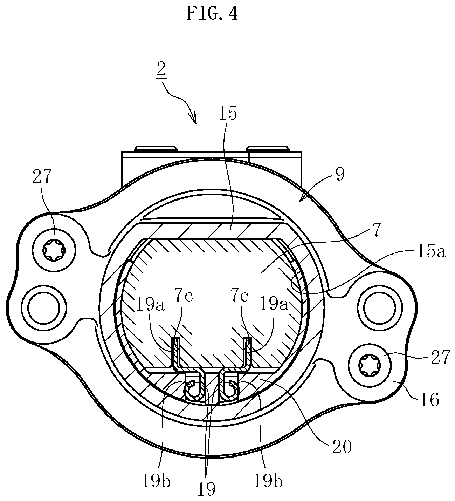

As illustrated in FIG. 3 and FIG. 4, a pair of terminals 19, 19 configured to electrically connect the electric motor 7 and a motive power supply (not shown) is mounted to the electric motor 7. The pair of terminals 19, 19 is held by a terminal holder 20 fitted over an outer periphery of the electric motor 7. One end portion 19a of each of the terminals 19 is inserted into an insertion groove 7c of the electric motor 7 to be electrically connected to the electric motor 7, and an electric wire (not shown) is connected to another end portion 19b. As illustrated in FIG. 1, a through hole 15c is formed in a bottom portion of the case main body 15. A grommet 21 is fitted into the through hole 15c. The electric wire (not shown) connected to the another end portion 19b of the terminal 19 is extracted to an outside of the first case 9 through each of holes 21a (see FIG. 3) formed in the grommet 21.

As illustrated in FIG. 1, FIG. 3, and FIG. 6, the speed reducer 8 in this embodiment is a planetary gear speed reducer. The planetary gear speed reducer comprises a sun gear 49, a ring gear 48, a plurality of (three in this embodiment) planetary gears 50, a planetary gear holder 52, and a planetary gear carrier 51. The sun gear 49 is provided so as to be integrally rotatable with an output shaft 7b of the electric motor 7. The ring gear 48 is provided integrally with or independently of (in this embodiment, integrally with) an inner peripheral surface of the second case 10. The planetary gears 50 are arranged between the ring gear 48 and the sun gear 49 so as to be rotatable and revolvable. The planetary gear holder 52 holds the planetary gears 50 in a rotatable manner. The planetary gear carrier 51 is configured to extract revolving motions of the planetary gears 50. The planetary gear carrier 51 comprises a cylindrical portion 51a arranged on a radially outer side of a nut 30 of the motion conversion mechanism unit 3 (ball screw 12). The cylindrical portion 51a and the nut 30 are coupled to each other so that a rotational torque is transmittable therebetween.

With use of the speed reducer 8 having the configuration described above, high-torque rotational power that is decelerated by the speed reducer 8 is transmitted to the motion conversion mechanism unit 3. Thus, the electric motor 7 of a small size can be adopted. As a result, the driving unit 2 can be reduced in weight and rendered compact. Thus, the electric actuator 1, which is lightweight and compact, can be achieved.

The second case 10 integrally comprises a case main body 23 having a cylindrical shape, a fitting portion 24 having a cylindrical shape, the motor fitting portion 17 having an annular shape, and the flange portion 25. The fitting portion 24 is fitted into an inner periphery of the third case 11. The projecting portion 7a of the electric motor 7 is fitted into the inner periphery of the motor fitting portion 17. The flange portion 25 has insertion holes for the bolt members 27 illustrated in FIG. 3. The second case 10 integrally comprises the above-mentioned fitting portion 24 and the above-mentioned motor fitting portion 17. As a result, centering among the first case 9, the second case 10, and the third case 11 can easily be achieved. Thus, the rotation center X of the electric motor 7 and a rotation center of the nut 30 of the ball screw 12, which is described later, can easily be matched with each other.

As illustrated in FIG. 1, the motion conversion mechanism unit 3 comprises the ball screw 12 and the third case 11 that accommodates the ball screw 12 therein. The ball screw 12 comprises a threaded shaft 31, the nut 30, and a block 33. The threaded shaft 31 is arranged coaxially with (in series to) the output shaft 7b of the electric motor 7. The nut 30 is fitted over an outer periphery of the threaded shaft 31 through intermediation of a plurality of balls 21 so as to be rotatable. The block 33 serves as a circulation member. The plurality of balls 32 are inserted between a helical groove 30a formed on an inner peripheral surface of the nut 30 and a helical groove 31a formed on an outer peripheral surface of the threaded shaft 31, and the block 33 is incorporated therebetween. With the configuration described above, when the threaded shaft 31 moves forward and backward in the axial direction (performs a linear motion) along with rotation of the nut 30, the balls 32 circulate between both of the helical grooves 30a and 31a.

The nut 30 receives the rotational driving force output from the driving unit 2 to rotate in any of a forward direction or a reverse direction. Meanwhile, the threaded shaft 31 is restricted from rotating by a rotation stopper described later. Thus, when the nut 30 receives the rotational driving force output from the driving unit 2 to rotate, the threaded shaft 31 moves forward and backward in the axial direction in accordance with the direction of rotation of the nut 30. An end of the threaded shaft 31 on the another axial side functions as the operating unit (actuator head) 6 configured to operate the target to be operated (not shown). Accordingly, along with the forward and backward movement of the threaded shaft 31 in the axial direction, the target to be operated is operated in the axial direction.

The third case 11 comprises a large-diameter cylindrical portion 35, a small-diameter cylindrical portion 36, and the flange portion 26 having an annular shape. The small-diameter cylindrical portion 35 is positioned on the another axial side of the large-diameter cylindrical portion 35. The flange portion 26 has through holes for the bolt members 27 illustrated in FIG. 3. An inner peripheral surface 37 of the large-diameter cylindrical portion 35 is formed as a cylindrical surface having a constant diameter. Bearings 13 and 14 configured to support the nut 30 in a freely rotatable manner with respect to the casing 1A (third case 11) are mounted and fixed onto the inner peripheral surface 37 so as to be separate from each other in the axial direction.

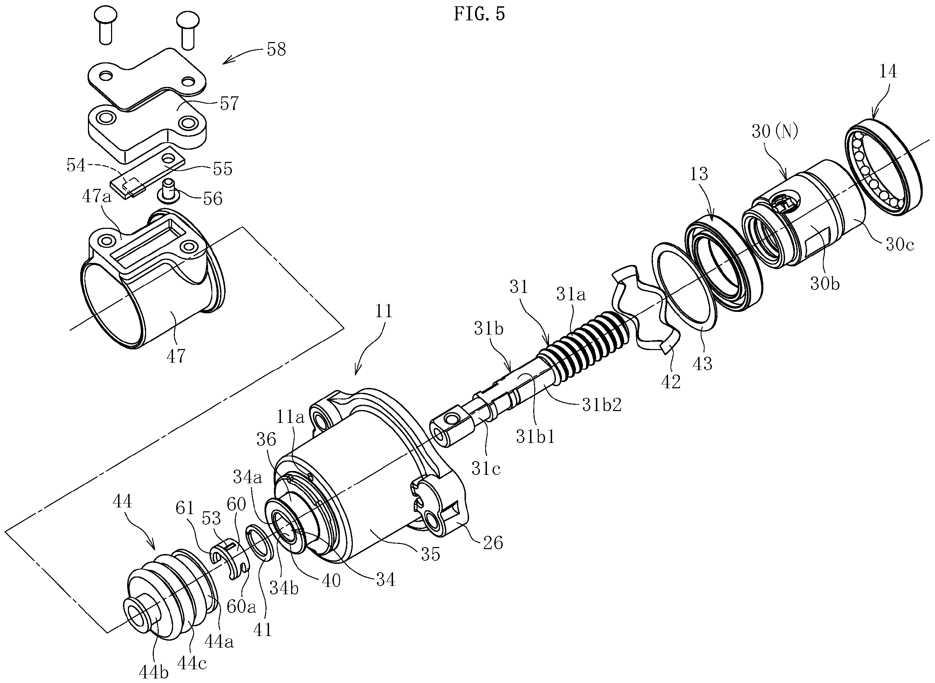

As the bearings 13 and 14, for example, deep groove ball bearings, which is a kind of rolling bearing, are used. As illustrated in FIG. 1 and FIG. 5, the nut 30 in this embodiment comprises a large-diameter portion 30b. The large-diameter portion 30b has an outer-diameter dimension larger than other portions, and is formed in an approximately intermediate portion of the nut 30 in the axial direction. On both axial sides of the large-diameter portion 30b, the bearings (rolling bearings) 13 and 14 are disposed. In this embodiment, the bearing 14, from which an inner ring is omitted with the formation of an inner raceway surface for the bearing 14 on an outer peripheral surface of the nut 30, is adopted. However, as the rolling bearing 14, a bearing comprising an inner ring to be fixed onto the outer peripheral surface of the nut 30 may also be adopted.

The third case 11 comprises a cylindrical member 38 made of a metal, which is arranged inside an inner periphery of the large-diameter cylindrical portion 35. The above-mentioned inner peripheral surface 37, onto which the bearings 13 and 14 (outer rings thereof) are mounted and fixed, is formed of an inner peripheral surface of the cylindrical member 38. An annular portion 39, which extends radially inward, is formed integrally with an end of the cylindrical member 38 on the another axial side. An elastic member (for example, a wave washer) 42, which is compressed and deformed in the axial direction, and a spacer washer 43 having an annular shape are provided between a surface of the annular portion 39 and a surface of the bearing 13, which are opposed to each other. Further, the bearing 14 positioned on the one axial side is biased toward the another axial side by the fitting portion 24 of the second case 10. With the configuration described above, a preload in the axial direction is applied to the bearings 13 and 14, each being formed of the rolling bearing.

As illustrated in FIG. 1, a slide bearing 40 having a cylindrical shape, which is made of a sintered metal, is provided inside an inner periphery of the small-diameter cylindrical portion 36 of the third case 11. The threaded shaft 31 is inserted into an inner periphery of the slide bearing 40. A sliding surface 34, on which the threaded shaft 31 can slide, is formed on an inner peripheral surface of the slide bearing 40. It is preferred that internal pores of the slide bearing 40 formed of a porous body made of a sintered metal are filled with a lubricant such as grease or lubricating oil through impregnation. In this manner, an oil film is formed between the inner peripheral surface (sliding surface 34) of the slide bearing 40 and the outer peripheral surface of the threaded shaft 31. Thus, the threaded shaft 31 can be smoothly linearly moved. At a predetermined position on the threaded shaft 31 in the axial direction, a snap ring 41 configured to position the slide bearing 40 in the axial direction is fixed.

In this embodiment, a rotation stopping function for the threaded shaft 31 is provided to the inner peripheral surface (sliding surface 34) of the slide bearing 40. More specifically, the sliding surface 34 has, as illustrated in FIG. 1 and FIG. 5, one flat surface 34a and an arc-shaped surface (partially cylindrical surface) 34b. The flat surface 34a is formed on a region in a circumferential direction of the slide bearing 40. Meanwhile, a sliding region 31b of the outer peripheral surface of the threaded shaft 31, which slides against the sliding surface 34, comprises a flat surface portion 31b1 and a partially cylindrical surface portion 31b2. The flat surface portion 31b1 is opposed to the flat surface 34a of the sliding surface 34. The partially cylindrical surface portion 31b2 is opposed to the partially cylindrical surface 34b.

The third case 11 in this embodiment, which has the above-mentioned configuration, is formed as a resin injection-molded product including the cylindrical member 38 and the slide bearing 40 as inserted components. In this case, holes 11a are formed in the third case 11 so as to each have a shape conforming to an outer peripheral surface of a positioning pin configured to position the cylindrical member 38 in the axial direction inside a die. After the third case 11 made of a resin, the cylindrical member 38 made of a metal, and the slide bearing 40 made of a sintered metal are manufactured individually, the above-mentioned members may be fixed by appropriate means.

As illustrated in FIG. 1, a boot 44 configured to prevent entry of a foreign substance into the third case 11 is mounted between the small-diameter cylindrical portion 36 of the third case 11 and the threaded shaft 31. The boot 44 is made of a resin or a rubber. The boot 44 comprises a large-diameter cylindrical portion 44a, a small-diameter cylindrical portion 44b, and a bellows portion 44c formed between the cylindrical portions 44a and 44b. The large-diameter cylindrical portion 44a, the small-diameter cylindrical portion 44b, and the bellow portion 44c are formed integrally with each other. The large-diameter portion 44a and the small-diameter portion 44b of the boot 44 are fastened and fixed onto an outer peripheral surface of the small-diameter cylindrical portion 36 of the third case 11 with use of a boot band 45 and onto an outer peripheral surface of the threaded shaft 31 with use of a boot band 46, respectively. A boot cover 47 configured to cover the boot 44 is disposed on an outer periphery of the boot 44. The boot cover 47 is mounted to, for example, the third case 11 adjacent thereto in the axial direction.

In this embodiment, the nut 30 (end 30c thereof on the one axial side) is coupled to the cylindrical portion 51a of the planetary gear carrier 51 under a state of being clearance-fitted into an inner periphery of the cylindrical portion 51a of the planetary gear carrier 51 so that a torque is transmittable therebetween. Thus, in this embodiment, the planetary gear carrier 51 (cylindrical portion 51a thereof) and the nut 30 correspond to an outer member M and an inner member N in the present invention, respectively. In this embodiment, the above-mentioned coupling structure is achieved with adoption of the following configuration.

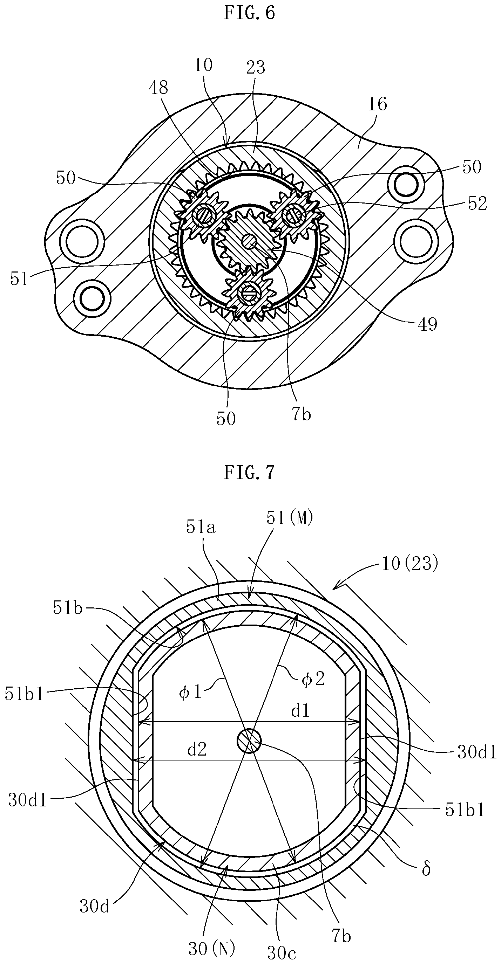

According to the invention, as illustrated in FIG. 7, a radially inner surface 51b of the cylindrical portion 51a of the planetary gear carrier 51 is formed into an approximately oval shape having a pair of flat surfaces 51b1 and 51b1 being parallel to each other. Specifically, circumferential regions of the radially inner surface 51b of the cylindrical portion 51a except for the flat surfaces 51b1 are formed as arc-shaped surfaces (partially cylindrical surfaces). Meanwhile, a radially outer surface 30d of the nut 30 (end 30c thereof on the one axial side) is also formed into an approximately oval shape having a pair of flat surfaces 30d1 and 30d1 being parallel to each other. The cylindrical portion 51a of the planetary gear carrier 51 is fitted over an outer periphery of the one end 30c of the nut 30 under a state in which phases of both of the flat surfaces 51b1 and the flat surfaces 30d1 are matched with each other.

A separation distance d1 between the flat surfaces 30d1 and 30d1 formed on the radially outer surface 30d of the nut 30 is smaller than a separation distance d2 between the flat surfaces 51b1 and 51b1 formed on the radially inner surface 51b of the cylindrical portion 51a of the planetary gear carrier 51 (dl<d2). Further, a diameter dimension ϕ1 between regions of the radially outer surface 30d of the nut 30, on which the arc-shaped surfaces are formed, is smaller than a diameter dimension ϕ2 between regions of the radially inner surface 51b of the cylindrical portion 51a of the planetary gear carrier 51, on which the arc-shaped surfaces are formed (ϕ1<ϕ2). In short, the nut 30 (one end 30c thereof) corresponding to the inner member N is clearance-fitted into the inner periphery of the cylindrical portion 51a of the planetary gear carrier 51 corresponding to the outer member M. A radial clearance δ is present between the radially outer surface 30d of the nut 30 and the radially inner surface 51b of the cylindrical portion 51a of the planetary gear carrier 51, which are opposed to each other. In FIG. 7, a clearance width of the radial clearance δ is illustrated in an exaggerated manner for easier understanding. An actual clearance width is set to 0.1 mm or smaller. The setting described above is because, if the clearance width of the radial clearance δ is too large, torque transmission performance between the planetary gear carrier 51 and the nut 30 is adversely affected.

As described above, even when the nut 30 is clearance-fitted into the inner periphery of the cylindrical portion 51a of the planetary gear carrier 51, each of the radially inner surface 51b of the cylindrical portion 51a and the radially outer surface 30d of the nut 30, which are opposed to each other, is formed into the oval shape. Therefore, the radially inner surface 51b of the cylindrical portion 51a and the radially outer surface 30d of the nut 30 can be engaged with each other in a circumferential direction of the nut 30. Thus, the rotational torque of the electric motor 7 can be transmitted to the nut 30 via the speed reducer 8 (planetary gear carrier 51 serving as an output member of the speed reducer 8).

A position detection device configured to detect a position of the threaded shaft 31 in the axial direction (movement amount of the threaded shaft 31 in the axial direction) is included in the electric actuator 1. The position detection device comprises, as illustrated in FIG. 1, a permanent magnet 53 corresponding to a sensor target, which is provided to the threaded shaft 31, and a magnet sensor 54 corresponding to a position detection sensor, which is provided to the boot cover 47. As the magnet sensor 54, a suitable type can be used. Among the suitable types, a sensor of type capable of detecting an orientation and a magnitude of a magnetic field with use of a Hall effect, such as a Hall IC and a linear Hall IC, can be suitably used.

As illustrated in FIG. 1 and FIG. 5, the magnetic sensor 54 is formed integrally with a sensor board 55. The sensor board 55 is fixed to a sensor case 57 with use of a coupling member 56. A sensor assembly 58 obtained by mounting the sensor board 55 to the sensor case 57 is mounted onto a sensor mounting portion 47a formed at a predetermined position on the boot cover 47 in a circumferential direction thereof. As a result, the magnetic sensor 54 is installed at the predetermined position on the boot cover 47 in the circumferential direction and is opposed to the permanent magnet 53 through the boot 44 and the boot cover 47 therebetween. In this case, the magnetic sensor 54 is, as illustrated in FIG. 1, in a state of being covered with the boot cover 47 and the sensor case 57. Each of the sensor case 57 and the boot cover 47, which cover the magnetic sensor 54, is made of a non-magnetic material such as a resin material.

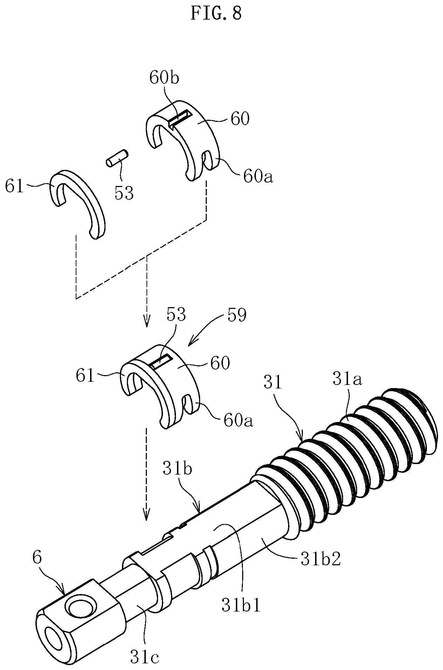

FIG. 8 is an exploded perspective view of a sensor target unit 59, which comprises a permanent magnet 53, and the threaded shaft 31. As illustrated in FIG. 8, a cutout 31c is formed at a predetermined position on the threaded shaft 31 in the axial direction. The sensor target unit 59 is mounted into the cutout 31c.

The sensor target unit 59 comprises the permanent magnet 53, a first magnet holder 60, and a second magnet holder 61. The first magnet holder 60 and the second magnet holder 61 are configured to hold the permanent magnet 53. The first magnet holder 60 is formed into an approximately arc-like shape as a whole, and comprises fitting claws 60a and an accommodating portion 60b. The fitting claws 60a are fitted to the cutout 31c of the threaded shaft 31. The accommodating portion 60b can accommodate the permanent magnet 53 therein. The accommodating portion 60b has an end on the another axial side being open to an end surface of the first magnet holder 60 on the another axial side. Then, the permanent magnet 53 is inserted into the accommodating portion 60b of the magnet holder 60 from the side on which the above-mentioned opening portion is located. After that, the second magnet holder 61, which is formed in an arc-like shape so as to close the above-mentioned opening portion, is fitted into the cutout 31c of the threaded shaft 31 to be positioned in the axial direction.

A material of the first magnet holder 60 and the second magnet holder 61 may basically be any suitable material. For example, when an effect on a magnet field formed by the permanent magnet 53 therearound is taken into consideration, it is suitable that each of the magnet holders 60 and 61 be formed of a non-magnetic material. When mountability of the magnet holders 60 and 61 to the threaded shaft 31 (elastic deformability of the fitting claws 60a) is additionally taken into consideration, it is preferred that the magnet holders 60 and 61 be made of a resin.

The position detection device has the configuration described above. Thus, when the threaded shaft 31 is moved forward and backward in the axial direction, a relative position of the permanent magnet 53 in the axial direction relative to the magnet sensor 54 is changed. Along with the change of the relative position, the magnetic field at the position at which the magnet sensor 54 is disposed is also changed. The magnetic sensor 54 detects the change in magnetic field, for example, a change in orientation of a magnetic flux density and a change in intensity thereof to acquire not only a position of the permanent magnet 53 in the axial direction but also a position of the threaded shaft 31 (operating unit 6) in the axial direction.

As described above, in the electric actuator 1 according to the present invention, the inner member N (nut 30 in this embodiment) and the outer member M (planetary gear carrier 51 in this embodiment), which are coupled to each other so that the rotational torque of the driving unit 2 is transmittable therebetween, are provided in a torque transmission path between the driving unit 2 and the motion conversion mechanism unit 3. The nut 30 corresponding to the inner member N is clearance-fitted into the inner periphery of the cylindrical portion 51a of the planetary gear carrier 51 corresponding to the outer member M.

According to the configuration described above, for example, when specifications of the driving unit 2 (electric motor 7 and speed reducer 8 included therein), and the motion conversion mechanism unit 3 (ball screw 12 included therein) are required to be changed, the planetary gear carrier 51 corresponding to the outer member M and the nut 30 corresponding to the inner member N can easily be separated from each other in the axial direction. Thus, the driving unit 2 or the motion conversion mechanism unit 3 can easily be replaced by the one having different specifications, for example, the one adopted in a second embodiment or a third embodiment of the present invention, which is described later. Although details are described later, the driving unit 2 having different specifications is adopted in the second embodiment and the third embodiment. In this case, constituent components other than a target to be replaced can be continuously used. Thus, a dedicated unit in accordance with, for example, an output of the electric actuator 1 is not required to be prepared or stored as the driving unit 2 or the motion conversion mechanism unit 3. Thus, the same driving unit 2 or the same motion conversion mechanism unit 3 can be used in the electric actuators 1 having various specifications.

In particular, in the electric actuator 1 described above, the driving unit 2 is formed by coupling, in the axial direction, the first case 9 that accommodates the electric motor 7 and the second case 10 that accommodates the speed reducer 8. Thus, the electric motor 7 or the speed reducer 8 can easily be replaced by the one having different specifications.

As described above, according to the present invention, the electric actuator 1, which can easily be changed in specifications, can be provided. In this manner, different models of the electric actuator 1 (development of a wide variety of models of the electric actuator 1) can easily be achieved at low cost.

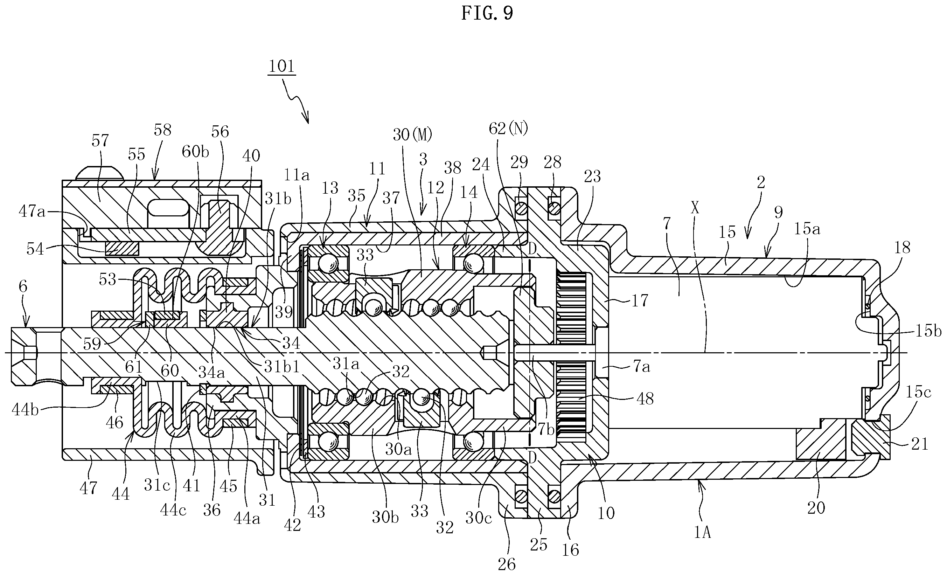

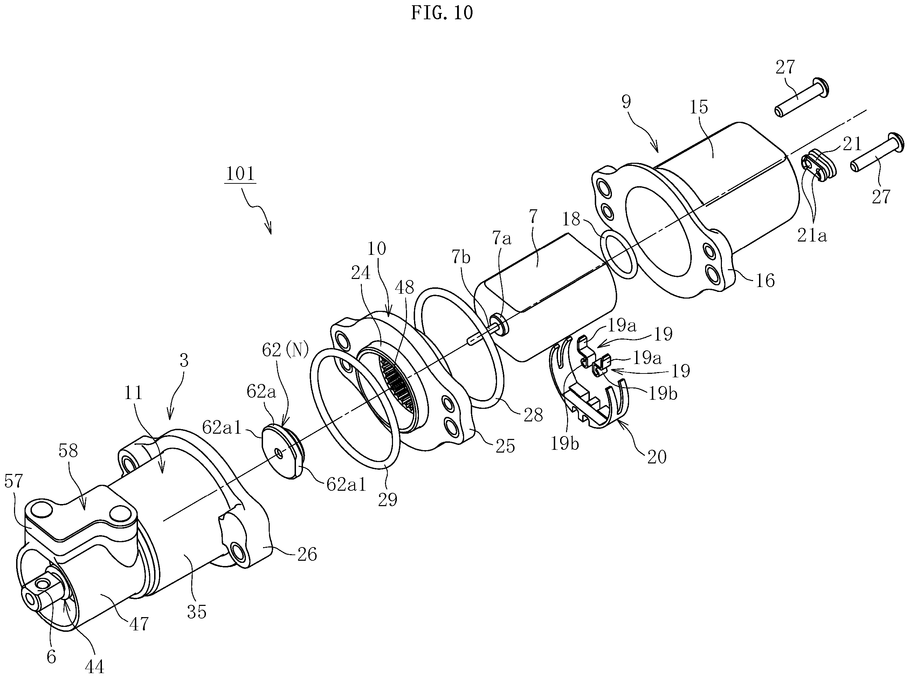

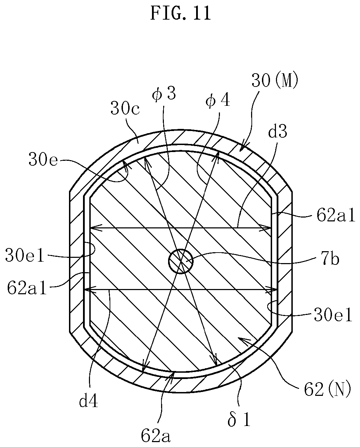

Now, an electric actuator 101 according to a second embodiment of the present invention is described with reference to FIG. 9, FIG. 10, and FIG. 11. FIG. 9 is a longitudinal sectional view. FIG. 10 is a partially exploded perspective view. FIG. 11 is a schematic longitudinal sectional view taken along the line D-D of FIG.9.

The electric actuator 101 of the unclaimed second embodiment is different in the configuration of the driving unit 2 from the electric actuator 1 according to the invention which has been described above. More specifically, in the electric actuator 101, the speed reducer 8 is omitted. In place of the speed reducer 8, a coupling 62 is provided to the output shaft 7b of the electric motor 7 so as to be rotatable integrally with the output shaft 7b. Thus, the rotational driving force of the driving unit 2 is transmitted to the motion conversion mechanism unit 3 (nut 30 of the ball screw 12) via the coupling 62. In the electric actuator 101 of the second embodiment, the coupling 62 is used in place of the speed reducer 8. Thus, the electric actuator 101 is used more preferably than the electric actuator 1 of the first embodiment for a purpose of use requiring a small output.

As illustrated in FIG. 10 and FIG. 11, as the coupling 62, a so-called oval coupling having a pair of flat surfaces 62a1, 62a1, which are parallel to each other and formed on a radially outer surface 62a thereof, is used. Further, as illustrated in FIG. 11, a radially inner surface 30e of the nut 30 of the ball screw 12 is formed into an oval shape having a pair of flat surfaces 30e1, 30e1 being parallel to each other. The coupling 62 is fitted into an inner periphery of the nut 30 under a state in which phases of both of the flat surfaces 62a1 and 30c1 are matched with each other.

As illustrated in FIG. 11, the coupling 62 is fitted (clearance-fitted) into the inner periphery of the nut 30 through a radial clearance δ1 having a clearance width of about 0.1 mm. In FIG. 11, the clearance width of the radial clearance δ1 is illustrated in an exaggerated manner for easier understanding. Specifically, a separation distance d3 between the flat surfaces 62a1 of the coupling 62 is smaller than a separation distance d4 of the flat surfaces 30e1 of the nut 30 (d3<d4). Further, a diameter dimension ϕ3 between regions of the radially outer surface 62a of the coupling 62 except for the flat surfaces 62a1 (regions on which arc-shaped surfaces are formed) is smaller than a diameter dimension ϕ4 between regions of the radially inner surface 30e of the nut 30 except for the flat surfaces 30e1 (regions on which the arc-shaped surfaces are formed) (ϕ3<ϕ4). As described above, even when the coupling 62 is clearance-fitted into the inner periphery of the nut 30, each of the radially inner surface 30e of the nut 30 and the radially outer surface 62a of the coupling 62, which are opposed to each other, is formed into the oval shape. Thus, the radially inner surface 30e of the nut 30 and the radially outer surface 62a of the coupling 62 can be engaged with each other in the circumferential direction. Thus, the rotational driving force of the electric motor 7 can be transmitted to the nut 30 via the coupling 62. As described above, in the electric actuator 101 according to the second embodiment, the nut 30 and the coupling 62 correspond to the outer member M and the inner member N in the present invention, respectively.

Configurations other than those described above, specifically, configurations of, for example, the casing 1A, the electric motor 7, and the motion conversion mechanism unit 3 are substantially the same in the electric actuator 1 according to the invention and the electric actuator 101 according to the second embodiment. Thus, the second case 10, which is used in the electric actuator 1 according to the invention, is continuously used as a case configured to accommodate the coupling 62 therein. In this case, as illustrated in FIG. 9, the ring gear 48 of the speed reducer 8 remains. However, the member accommodated inside the inner periphery of the second case 10 is substantially only the coupling 62. Thus, there is no risk of occurrence of interference between the ring gear 48 and the coupl ing 62.

As described above, the electric actuator 101 according to the second embodiment corresponds to a configuration in which at least one component (more specifically, the speed reducer 8) of the electric actuator 1 according to the first embodiment is replaced by the coupling 62. As the other components, the same components are basically used. In this manner, different models of the electric actuator can be achieved at low cost.

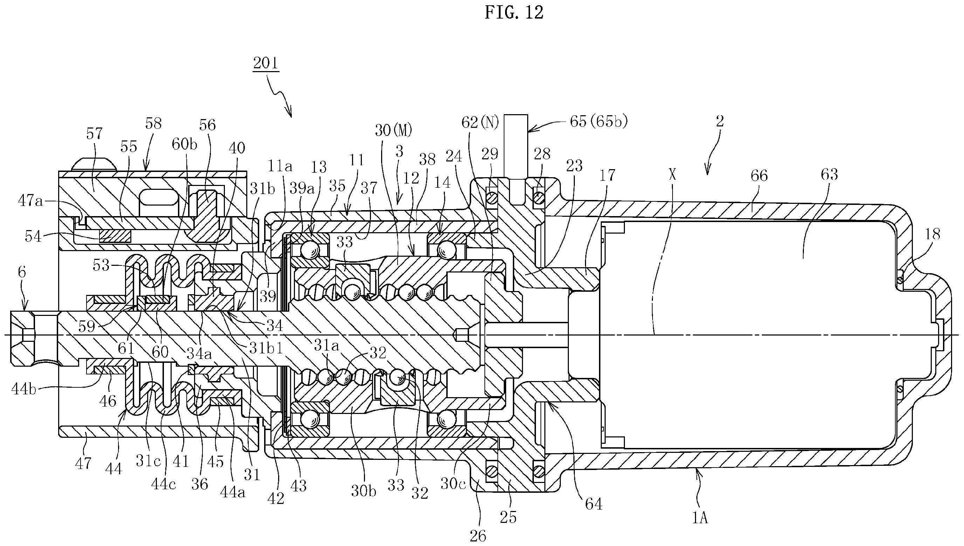

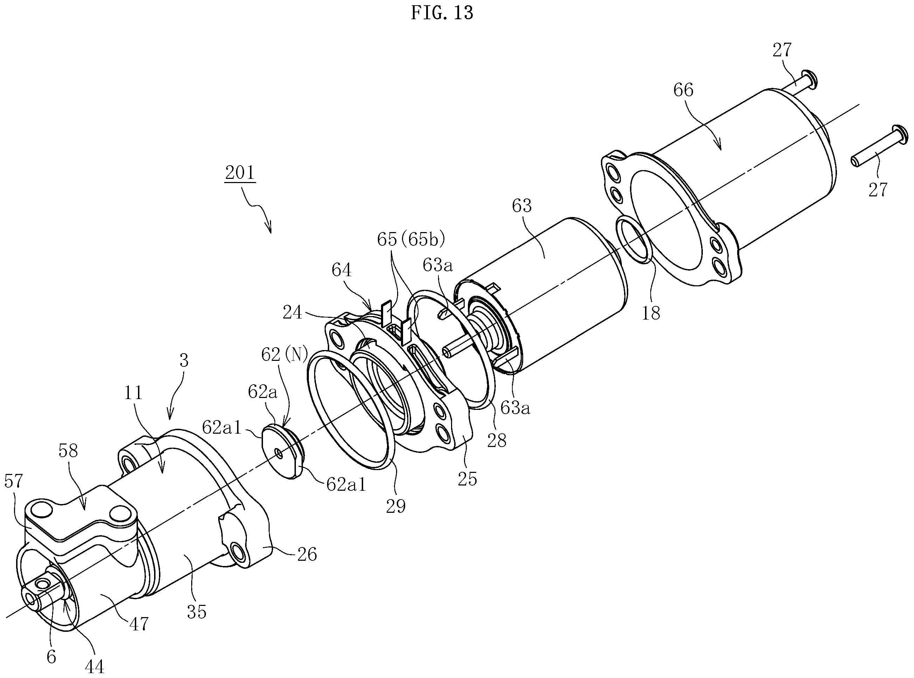

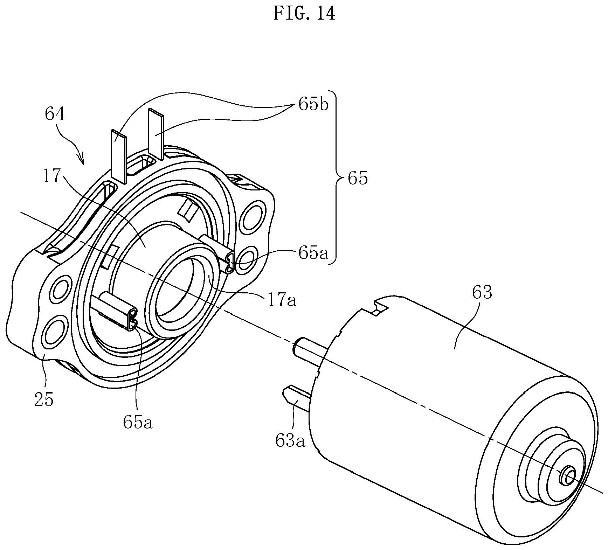

Now, an electric actuator 201 according to an unclaimed third embodiment of the present invention is described with reference to FIG. 12 to FIG. 14.

The electric actuator 201 according to the third embodiment is a modification example of the electric actuator 101 according to the second embodiment. The electric actuator 201 of this embodiment is different from the electric actuator 101 according to the second embodiment mainly in two points, specifically, in that an electric motor 63 having a large output is adopted as the electric motor of the driving unit 2 and in a power supply structure for the electric motor 63. Details of the power supply structure adopted in the electric actuator 201 are as follows.

A second case 64 used in the electric actuator 201 of this embodiment integrally comprises, similarly to the second case 10 used in the electric actuators 1 and 101 described above, the case main body 23, the fitting portion 24, the motor fitting portion 17, and the flange portion 25. Meanwhile, a pair of bus bars 65 configured to connect the electric motor 63 to a motive power supply (not shown) is mounted to the second case 64 in this embodiment. One end 65a of each of the bus bars 65 is connected to a terminal 63a of the electric motor 63 through, for example, caulking. Another end 65b is exposed to the outside from the case main body 23 (flange portion 25) (see FIG. 12 to FIG. 14). In the manner described above, the electric motor 63 and the motive power supply can be electrically connected to each other through the bus bars 65. In this case, the grommet 21 illustrated. in, for example, FIG. 3 is not needed. As a first case 66 that accommodates the electric motor 63 therein, a case without a hole in a bottom thereof is used.

Configurations other than those described above, specifically, configurations of the motion conversion mechanism unit 3 and a coupling structure between the coupling 62 and the nut 30 of the ball screw 12 are substantially the same as those of the electric actuator 101 according to the second embodiment, which is illustrated in, for example, FIG. 9. In short, the electric actuator 201 according to the third embodiment corresponds to the electric actuator 101 according to the second embodiment in which at least one configuration, specifically, the driving unit 2 (portion of the driving unit 2 except for the coupling 62) and the second case 10 are replaced by components, each having a different structure. For the other components, the same components are basically used. In this manner, different models of the electric actuator can be achieved at low cost.

The electric actuator 201 according to the third embodiment described above is configured so that the rotational driving force of the driving unit 2 is transmitted to the nut 30 of the motion conversion mechanism unit 3 (ball screw 12) via the coupling 62 connected to the output shaft of the electric motor 63. However, the coupling 62 may be replaced by the speed reducer 8 illustrated in, for example, FIG. 1. In this case, the output member of the speed reducer 8 (planetary gear carrier 51) and the nut 30 are coupled to each other in a mode illustrated in, for example, FIG. 7.

As a specific example of the development of a wide variety of models along with manufacture of different models of the electric actuators 1, 101, and 201 described above, for example, an electric mechanism using a related-art solenoid, such as an EGR valve or a transmission control valve for a vehicle including a two-wheel vehicle can be given.

The electric actuators 1, 101, and 201 according to the embodiments of the present invention have been described above. However, the embodiments of the present invention are not limited to those described above. For example, in the embodiments described above, the ball screw 12 is adopted for the motion conversion mechanism unit 3. In place of the ball screw 12, a so-called sliding screw from which the balls 32 and the block 33 serving as the circulation member are omitted may be adopted.

In the embodiments described above, the planetary gear speed reducer has been adopted as the speed reducer 8. However, as the speed reducer 8, other speed reducers, for example, a traction drive type planetary speed reducer (planetary roller speed reducer) may also be adopted.

Further, in the embodiments described above, each of the radially inner surface of the outer member M and the radially outer surface of the inner member N is formed into the oval shape. After that, the inner member N is clearance-fitted into the inner periphery of the outer member M to thereby enable transmission of the rotational torque between the outer member M and the inner member N. At the same time, the outer member M and the inner member N can easily be separated from each other in the axial direction. However, as long as the above-mentioned function is fulfilled, the shape of the radially inner surface of the outer member M and the shape of the radially outer surface of the inner member N may be suitably changed. More specifically, when each of the radially inner surface of the outer member M and the radially outer surface of the inner member N is formed into a polygonal shape or a non-circular shape such as a tooth flank shape, the same functions and effects as those described above can be enjoyed. However, it is preferred that each of the radially inner surface of the outer member M and the radially outer surface of the inner member N be formed in the oval shape. The reasons are follows. As compared to a case in which the polygonal shape or the tooth flank shape is adopted, manufacturing cost of the outer member M and the inner member N can be reduced. Further, coaxiality between the output shaft of the electric motor 7, 63 and the threaded shaft 31 is easily maintained.

The present invention is not limited to the above-mentioned embodiments. The scope of the present invention is defined in the claims.

### Reference Signs List

- 1, 101, 201: electric actuator
- 1A: casing
- 2: driving unit
- 3: motion conversion mechanism unit
- 7: electric motor
- 8: speed reducer
- 12: ball screw
- 30: nut
- 31: threaded shaft
- 32: ball
- 33: block
- 48: ring gear
- 49: sun gear
- 50: planetary gear
- 51: planetary gear carrier
- 62: coupling
- M: outer member
- N: inner member
- δ, δ1: radial clearance

## Claims

1. An electric actuator (1, 201), comprising:
a driving unit (2) comprising an electric motor (7, 63) and a speed reducer (8) configured to decelerate rotation of the electric motor (7, 63) and output the decelerated rotation; and
a motion conversion mechanism unit (3), which is configured to convert a rotary motion of the driving unit (2) into a linear motion, and is arranged in series to the driving unit (2), the motion conversion mechanism unit (3) comprising:
a nut (30) configured to receive the rotary motion of the driving unit (2) to be rotated; and
a threaded shaft (31), which is disposed inside an inner periphery of the nut (30) and is configured to perform a linear motion along with the rotation of the nut (30),
wherein the threaded shaft (31) is arranged coaxially with an output shaft (7b) of the electric motor (7, 63),
wherein an inner member (N) and an outer member (M), which are coupled to each other so that a rotational torque of the driving unit (2) is transmittable therebetween, are provided in a torque transmission path between the driving unit (2) and the motion conversion mechanism unit (3),
**characterized in that**
the nut (30) as the inner member (N) is clearance-fitted into an inner periphery of an output member (51) of the speed reducer (8) as the outer member (M), and
each of a radially outer surface (30d) of the nut (30) and a radially inner surface (51b) of the output member (51) of the speed reducer (8), which are opposed to each other through a radial clearance (δ), is formed into an oval shape having a pair of flat faces (30d1, 51b1) being parallel to each other.

2. The electric actuator (1, 201) according to claim 1, wherein the speed reducer (8) comprises a planetary gear speed reducer.

## Patentansprüche

1. Elektrischer Aktor (1, 201), umfassend:
eine Antriebseinheit (2), die einen Elektromotor (7, 63) und einen Drehzahlminderer (8) umfasst, der konfiguriert ist, eine Drehung des Elektromotors (7, 63) zu verlangsamen und die verlangsamte Drehung auszugeben; und
eine Bewegungswandlungsmechanismuseinheit (3), die konfiguriert ist, eine Drehbewegung der Antriebseinheit (2) in eine lineare Bewegung umzuwandeln, und in Reihe mit der Antriebseinheit (2) angeordnet ist, wobei die Bewegungswandlungsmechanismuseinheit (3) umfasst:
eine Mutter (30), die konfiguriert ist, die Drehbewegung der Antriebseinheit (2) aufzunehmen, um gedreht zu werden; und
eine Gewindewelle (31), die innerhalb eines Innenumfangs der Mutter (30) angeordnet ist und konfiguriert ist, eine lineare Bewegung einhergehend mit der Drehung der Mutter (30) auszuführen,
wobei die Gewindewelle (31) koaxial zu einer Ausgangswelle (7b) des Elektromotors (7, 63) angeordnet ist,
wobei ein Innenelement (N) und ein Außenelement (M), die miteinander so gekoppelt sind, dass ein Drehmoment der Antriebseinheit (2) dazwischen übertragen werden kann, in einem Drehmomentübertragungspfad zwischen der Antriebseinheit (2) und der Bewegungswandlungsmechanismuseinheit (3) bereitgestellt sind,
**dadurch gekennzeichnet, dass**
die Mutter (30) als das Innenelement (N) in einen Innenumfang eines Ausgangselements (51) des Drehzahlminderers (8) als dem Außenelement (M) mit Spielpassung eingepasst ist, und
jede von einer radial äußeren Fläche (30d) der Mutter (30) und einer radial inneren Fläche (51b) des Ausgangselements (51) des Drehzahlminderers (8), die über einen radialen Spalt (δ) einander gegenüberliegen, in einer ovalen Form ausgebildet ist, die ein Paar flache Flächen (30d1, 51b1) aufweist, die parallel zueinander sind.

2. Der elektrische Aktor (1, 201) nach Anspruch 1, wobei der Drehzahlminderer (8) einen Planetengetriebe-Drehzahlminderer umfasst.

## Revendications

1. Actionneur à entraînement électrique (1, 201), comprenant
une unité d'entraînement (2) comprenant un moteur électrique (7, 63) et un réducteur de vitesse (8) configuré pour décélérer la rotation du moteur électrique (7, 63) et délivrer la rotation décélérée; et
une unité de mécanisme de conversion de mouvement (3), qui est configurée pour convertir un mouvement rotatif de l'unité d'entraînement (2) en un mouvement linéaire, et est agencée en série avec l'unité d'entraînement (2), l'unité de mécanisme de conversion de mouvement (3) comprenant:
un écrou (30) configuré pour recevoir le mouvement de rotation de l'unité d'entraînement (2) à faire tourner; et
un arbre fileté (31), qui est disposé à l'intérieur d'une périphérie intérieure de l'écrou (30) et est configuré pour effectuer un mouvement linéaire en même temps que la rotation de l'écrou (30),
dans lequel l'arbre fileté (31) est disposé de manière coaxiale à un arbre de sortie (7b) du moteur électrique (7, 63),
dans lequel un élément interne (N) et un élément externe (M), qui sont couplés l'un à l'autre de sorte qu'un couple de rotation de l'unité d'entraînement (2) peut être transmis entre eux, sont prévus dans un trajet de transmission de couple entre l'unité d'entraînement (2) et l'unité de mécanisme de conversion de mouvement (3),
**caractérisé en ce que**
l'écrou (30) en tant qu'élément interne (N) est ajusté avec jeu dans une périphérie interne d'un élément de sortie (51) du réducteur de vitesse (8) en tant qu'élément externe (M), et
chacune d'une surface radialement extérieure (30d) de l'écrou (30) et d'une surface radialement intérieure (51b) de l'élément de sortie (51) du réducteur de vitesse (8), qui sont opposées l'une à l'autre par un jeu radial (5), est formée en une forme ovale ayant une paire de faces plates (30d1, 51 b1) parallèles l'une à l'autre.

2. Actionneur à entraînement électrique (1, 201) selon la revendication 1, dans lequel le réducteur de vitesse (8) comprend un réducteur de vitesse à engrenage planétaire.
